# EUROPEAN PATENT APPLICATION

(11) **EP 0 996 081 A2**
(43) Date of publication of application: **26.04.2000**
(21) Application number: 99307993.8
(22) Date of filing: 11.10.1999
(51) Int. Cl.: G06K 11/20, G06K 11/18

(54) **Game controller**

(30) Priority: 21.10.1998 US 177136
(71) Applicant: ACCO Brands, Inc., Lincolnshire, IL 60069-3665 (US)
(72) Inventor: Dougan, Shannon, Vancouver, BC V6H 1A5 (CA); Leung, Henry, Coquitlam, BC V3B 6W1 (CA); Fraenkel, Cris, North Vancouver, BC V7H 2E8 (CA); Pyner, Derek, North Delta, BC V4C 4C9 (CA)
(74) Representative: Hackney, Nigel John

(57) **Abstract**

An improved interface controller for use with a lap top personal computer is provided. In one aspect of the controller, a low power consumption, multi-axis, multi-value generator is provided. Due to the low power consumption, the multivalue generator operates well within the power constraints of a serial port. Additionally, the device has minimal impact on the power consumption of a battery powered, lap top personal computer. In another aspect, a neural jitter reduction system is used in conjunction with the multivalue generator. The neural jitter reduction system qualifies changes in the sensor array position, differentiating between human operation and noise generated jitter. In another aspect, the interface controller can be used in any of three, user-selected modes: game controller, joystick, or mouse. A combination of firmware and software allow the controller to emulate any of these three devices, thus increasing the usefulness of the device.

## Description

The present invention relates to a controller for a personal computer, and more specifically, to a controller that provides enhanced usability and configuration options for a lap top computer.

It is well known to use controllers, specifically game controllers, in conjunction with personal computers. A game controller, such as a joystick, control pad, steering wheel, or throttle, interfaces to the personal computer through a game port, serial port, or other interface means. Interfacing these controllers through any of these types of connections has design considerations that limit the options available to the user. In the case of the serial port, although it allows a controller to offer many analog controls, the serial port is often required for use with other external devices, such as a mouse. Therefore in order to utilize a serial port connection for the game controller, either multiple serial ports must be available on the computer and not in use by other devices (e.g., a modem) or the user must alternate between devices on the available serial port. The latter approach, however, typically requires reconfiguring and rebooting the computer each time the user wishes to change the device coupled to the serial port. Such a process may be especially problematic when the user wishes to routinely alternate between programs requiring a mouse (*e*.*g*., spread sheets and word processors) and game programs requiring a game controller.

Many game controllers utilize one or more Hall effect devices, hereafter referred to as HEDs. HEDs offer the advantage of electrical isolation between the game control (*e*.*g*., joystick or thumb pad) and the input circuit. They also offer virtually maintenance free operation since the moving portion is a simple permanent magnet while the sensor portion of the HED is preferably mounted in a fixed position. Due to these advantages, HEDs are typically used in game applications that require high reliability and where the number of operating cycles is also high.

An RS232 serial port can only continuously supply about 10 milliamps at 5 volts or about 50 milliwatts. Additionally, it is desirable to minimize power consumption in certain applications, for example with lap top computers that have limited power resources. Unfortunately, a single standard HED requires 5 milliamps at 5 volts or about 25 milliwatts. Since each axis in a sensor array requires 2 HEDs, each axis requires about 50 milliwatts. Furthermore, a standard game pad application requires at least two axis movements, thus requiring approximately 100 milliwatts. Thus a typical game controller joystick or thumb pad can not be used with a standard RS232 serial port and would be overly burdensome to the limited power resources of a lap top computer.

From the foregoing, it is apparent that a low power consumption game controller that can be used as a game controller, joystick, or mouse and that can be coupled to a computer through a serial port is desirable.

Preferably, the present invention provides an improved interface controller ideally suited for use with a lap top personal computer. Further, the present invention provides for an improved controller that merges button configurations and layouts of joystick-type and control pad-type controllers.

One aspect of the present invention provides for an interaction device for providing data to a computer system through a serial port such as an RS232 serial port of a computer system. The data is generated within the interface controller by a multi-axis, multi-value generator as well as by numerous digital control buttons. The multi-axis, multi-value generator requires only a small amount of power, thus operating well within the power constraints of the serial port as well as having minimal impact on the power consumption of the system, thus enabling the use of the device with a battery powered, lap top personal computer.

In another aspect of the invention, a neural jitter reduction system is used in conjunction with the low power consumption, multi-value generator. In the preferred embodiment of the invention, the multi-value generator utilizes HEDs. In order to achieve low power consumption, the HEDs use reduced current, thus requiring an increase in the gain of the analog front-end amplifier. The increased gain increases the jitter of the sensor array due to the low signal level, noisy operating environment. The neural jitter reduction system of the invention qualifies changes in the sensor array position, thereby differentiating between human operation and noise generated jitter.

In another aspect of the invention, the interface controller can be used in any of three, user-selected modes: game controller, joystick, or mouse. A combination of firmware and software allow the controller to emulate any of these three devices, thus increasing the usefulness of the device.

A further understanding of the nature and advantages of the present invention may be realized by reference to the remaining portions of the specification and the drawings.

### BRIEF DESCRIPTION OF THE DRAWINGS

Fig. 1 is an illustration of an embodiment of a basic computer system for use in conjunction with the present invention;
Fig. 2 is block diagram illustrating some of the subsystems of the computer system shown in Fig. 1;
Fig. 3 is a top view of a controller according to the invention;
Fig. 4 is a block electronic schematic diagram of the controller shown in Fig. 3;
Fig. 5 schematically illustrates the use of HEDs in a prior art position sensor;
Fig. 6 is an illustration of a power management sensor circuit according to the present invention;
Fig. 7 is a schematic of the low power circuit used with the multivalue generator of the invention;
Fig. 8 is an electrical schematic of the digital keys and the microcontroller;
Fig. 9 is a schematic of the power supply/reset circuit, the serial interface, and the layout of the RS232 connection cable;
Fig. 10 is an illustration of an alternate power management sensor circuit according to the present invention; and
Fig. 11 is a flow chart illustrated the jitter reduction technique of the present invention.

### DESCRIPTION OF THE SPECIFIC EMBODIMENTS

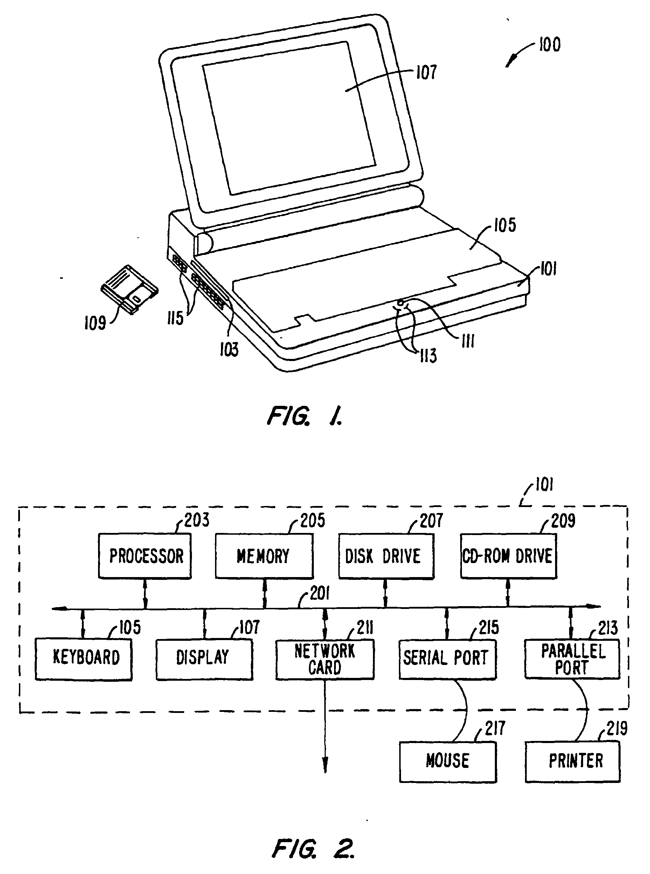

Fig. 1 is an illustration of an embodiment of a basic computer system 100 for use in conjunction with the present invention. As shown, computer system 100 is a lap top personal computer although the invention can also be used for desk-type computing systems. Computer system 100 includes a case 101, an internal disk drive unit 103, a keyboard 105, and a built-in display screen 107. A floppy disk 109 stores code and other software for use with computer system 100 and internal disk drive unit 103. Computer system 100 may also include a built-in relative pointing device or "mouse" 111 and associated function buttons 113.

Computer case 101 houses additional components of computer system 100 that are not shown, such as a processor, memory, additional disk drives, compact disc read only memory (*i.e*., CD-ROM), and other block memory devices like removable media drives (*e.g*., ZIP drives). Typically computer system 100 also includes one or more interface ports 115, for example a serial port and a parallel port. Ports 115 can be used to couple a variety of external devices to system 100, including a mouse, modem, printer, joystick, game controller, *etc*.

Fig. 2 is a block diagram illustrating some of the subsystems of computer system 100. These subsystems are interconnected via a bus 201. A central processor 203 communicates with a system memory 205, a fixed disk 207, an optional CD-ROM drive 209, an optional network interface 211, a parallel port 213, and a serial port 215. Some of the subsystems interface to either user input or output devices such as display 107, keyboard 105, and built-in mouse 111. Network interface 211 is used to connect computer system 100 to additional external computer systems on a network. Serial port 215 can be used to couple system 100 to an external mouse 217 and parallel port 213 can be used to couple system 100 to a printer 219.

Many other configurations of subsystems are possible than that shown in Fig. 2. A computer system suitable for use with the present invention can use more or less subsystems, components or devices than those shown in Fig. 2. For example, a desk top computer may include more memory units and drive units than a lap top computer. Additionally, a computer may also include a game port for interfacing the computer system with a standard game controller and a PCCARD, formerly PCMCIA, card interface for storing, retrieving, or accessing data from an external card or device.

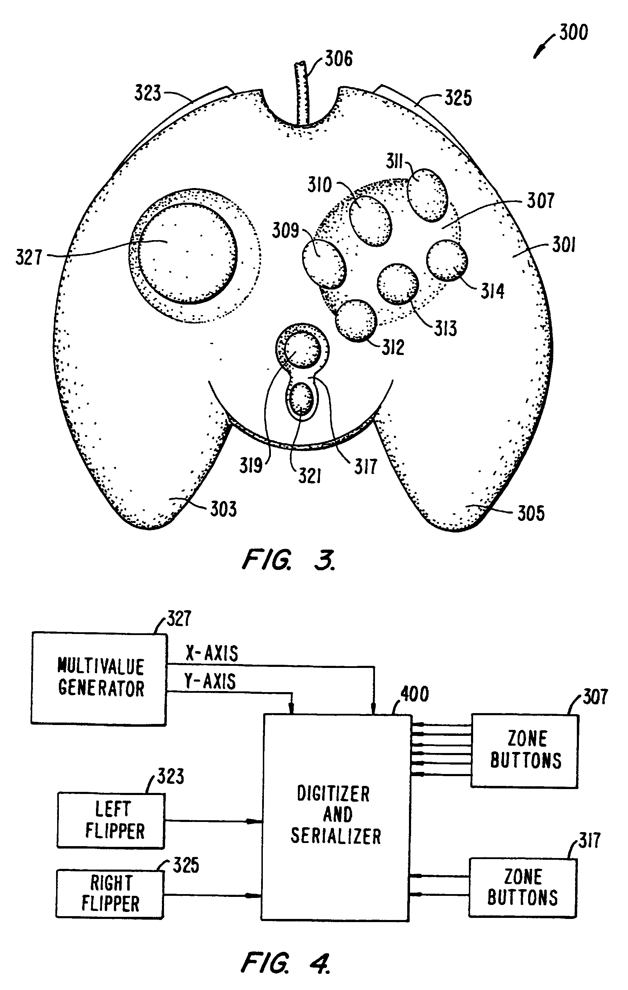

Fig. 3 is a top view of the preferred embodiment of a game controller 300 according to the invention. Game controller 300 includes a housing 301. Housing 301 is designed to be relatively small in size, thus being easily transportable along with a lap top computer. Housing 301 includes a first handle 303 and a second handle 305. Handles 303 and 305 allow the controller to be comfortably held in two hands, the preferred holding arrangement when controller 300 is being used as a game controller. When controller 300 is held in this manner, the digital switches and the multi-axis controller are operated by the user's thumbs, while the flippers are operated by the user's forefingers or middle fingers. Coupling controller 300 to a computer 100 is a cable 306, shown in part in Fig. 3. Cable 306 is preferably shorter than a standard mouse or game controller cable, thus making controller 300 more convenient for travel and use in small, confined areas. Preferably cable 306 is between 3 and 4 feet in length.

Controller 300 includes a large number of buttons, organized by zones. One button zone 307 includes six digital buttons 309-314. In the preferred embodiment, a software driver implemented to run in conjunction with computer system 100 maps operation of these keys to the desired joystick, keyboard, mouse, or game controller functions. A second button zone 317 includes two additional digital buttons, a start button 319 and a select button 321. Housing 301 also includes a pair of digital flippers, 323 and 325.

Besides the digital switches, controller 300 also includes a multi-axis controller 327, also referred to as a multivalue generator. Such devices are distinguishable over a digital multipad in that more than two discrete binary values are generated. In the preferred embodiment, multivalue generator 327 detects displacement of the button in each of two orthogonal axes, corresponding to an X-axis and a Y-axis, preferably utilizing Hall effect devices (*i.e*., HEDs).

Fig. 4 is a block electronic schematic diagram of controller 300. Multivalue generator 327, digital flippers 323 and 325, and digital buttons 309-314, 319, and 321 are input into a digitizer and serializer (DS) 400. DS 400, in the preferred embodiment, is a suitably programmed microcontroller/microprocessor that converts multivalues, such as those from multivalue generator 327, into digital values. These digital values are combined with those from the digital flippers and the digital buttons into a digital stream that is provided to computer 100 via cable 306 through serial port 215.

Multivalue generator 327 utilizes HEDs. The use of HEDs in position sensors is well known by those of skill in the art. In a typical HED, the sensor is mounted in a fixed position while the moving portion of the sensor, a permanent magnet, is mounted to the thumb-pad. Preferably a spring or an elastomeric member is used to maintain the thumb-pad in the center or zero position when a force is not being applied to the pad.

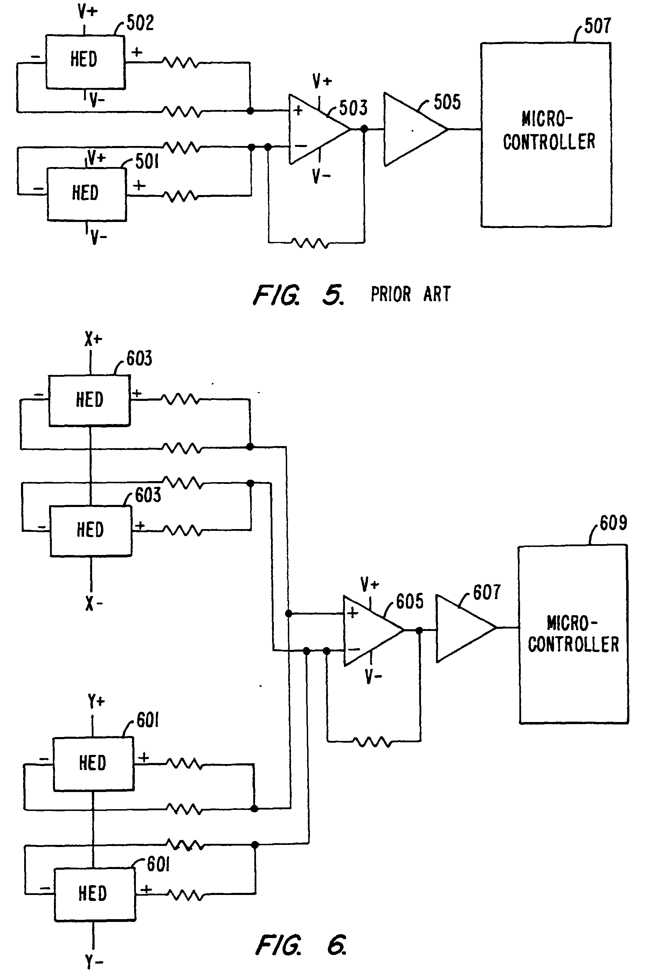

Fig. 5 schematically illustrates the use of HEDs in a prior art position sensor. As illustrated, two HEDs 501-502 are used to monitor the position along a single axis. If the position sensor included a second axis, the second axis would be a duplicate of the first axis. The outputs of each HED in each pair (*i.e*., each axis) are opposite in polarity and are fed into a summing amplifier 503 which is in turn coupled to amplifier 505. Amplifier 505 is coupled to a microcontroller or microprocessor 507. In operation, each fixed HED sensor (*i*.*e*., 501, 502) picks up the magnetic field of a permanent magnet attached to the thumb-pad. The relative position of the magnet on the axis is proportional to the resultant voltage at the output of the summing amplifer.

The position sensor illustrated in Fig. 5 requires approximately 50 milliwatts. Therefore in order to support a two-axis (*i*.*e*., X- and Y-axis) multivalue generator, the sensors draw approximately 100 milliwatts. Since the summing amplifiers require an additional 10 milliwatts, a standard two-axis multivalue generator according to the prior art draws approximately 110 milliwatts. This amount of power is significantly above the 50 milliwatts available from a typical RS232 serial port.

Fig. 6 is an illustration of a power management sensor circuit according to the present invention. Each axis of the position sensor includes a pair of HEDs, 601 and 603, respectively, that are cascaded. Cascading the HED pairs cuts current consumption by approximately 70 percent, from about 10 milliamps per axis to about 3 milliamps per axis. In order to compensate for the decreased current, the gain of the summing amplifier is increased. A further reduction in current consumption is achieved by multiplexing the outputs of the sensor pairs such that they share the same summing amplifier 605 and gain amplifier 607.

In the preferred embodiment of the invention, a further reduction in power consumption is achieved by multiplexing the supply feed to the HEDs, shown as X+, X-, Y+, and Y- in Fig. 6. These signals are driven by four outputs of a microcontroller 609 that also has a tri-state output capability. Each axis can be driven with a 1 percent duty cycle signal and set to a high impedance state for the remaining 99 percent of the time. This approach allows the total current consumption to be reduced to approximately 0.06 milliamps for both the X- and Y-axes and approximately 3 milliamps for the circuit. Thus the preferred embodiment of the invention consumes a total of approximately 15 milliwatts for the two-axis multivalue generator as opposed to approximately 110 milliwatts for the prior art approach.

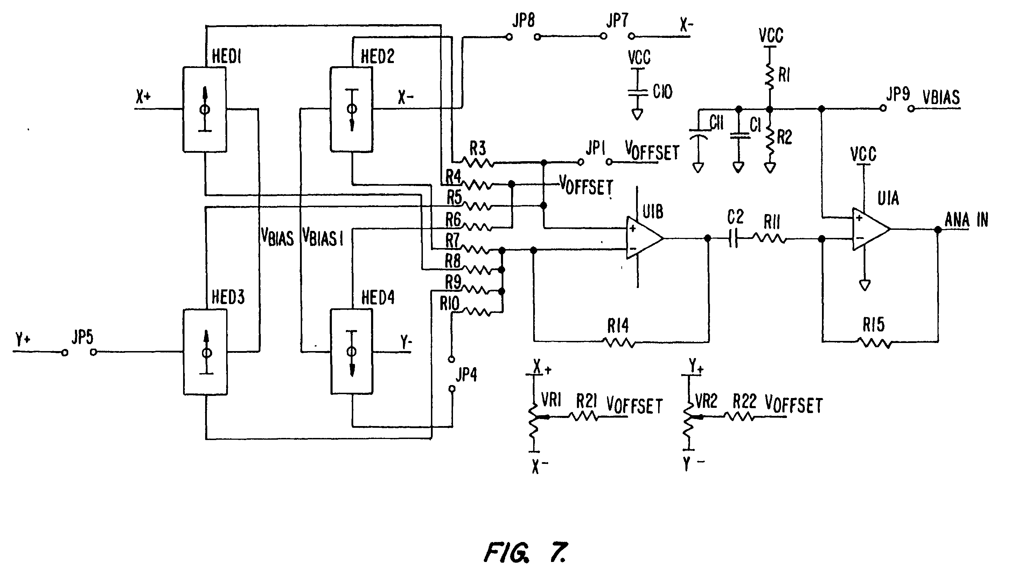

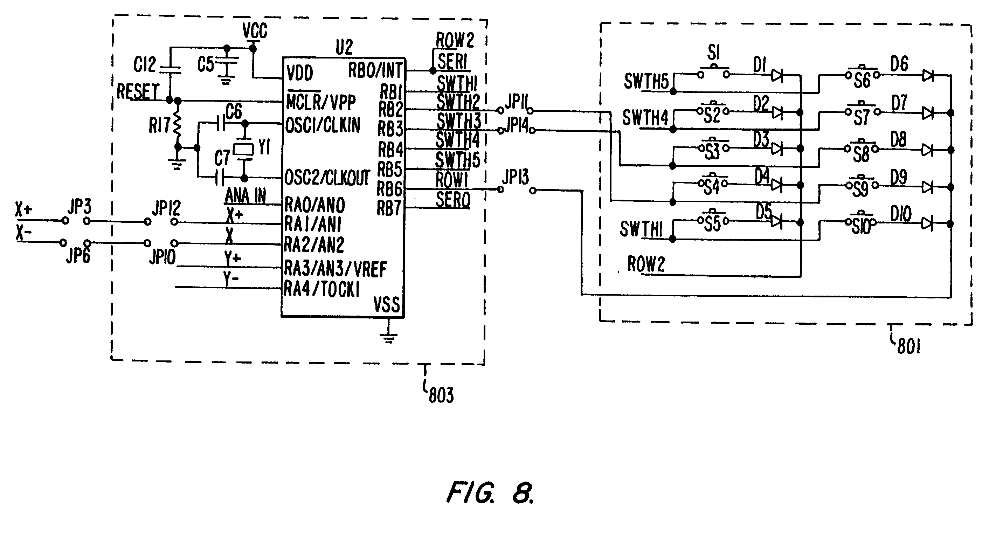

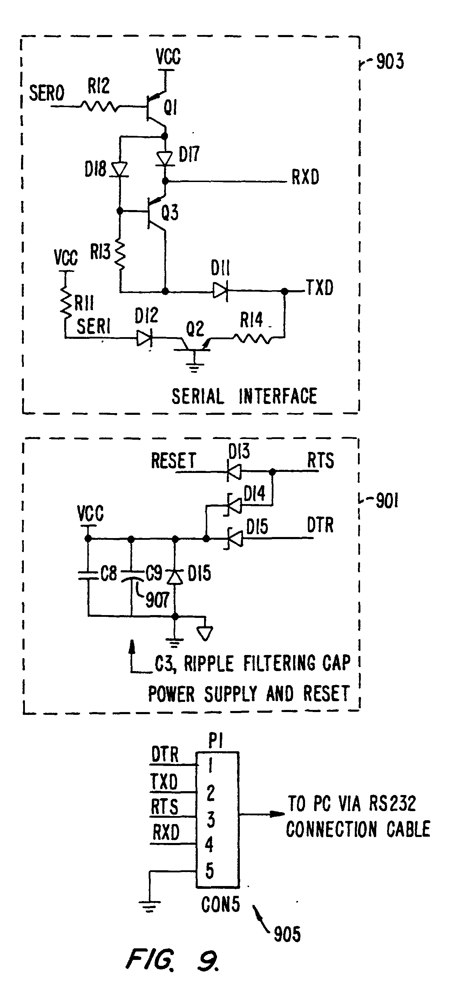

Figs. 7-9 are detailed electrical schematics of controller 300. Fig. 7 illustrates the low power circuit used with the multivalue generator of the invention. Fig. 8 includes a schematic of the digital keys 801 and the microcontroller 803. Fig. 9 illustrates the power supply/reset 901, serial interface 903, and the layout of the RS232 connection cable 905. Power supply 901 preferably includes a relatively large capacitor 907, preferably a 47 microfarad capacitor, that is used across the input supply to reduce the ripple resulting from the non-constant current consumption that is due to the multiplexing approach of the invention.

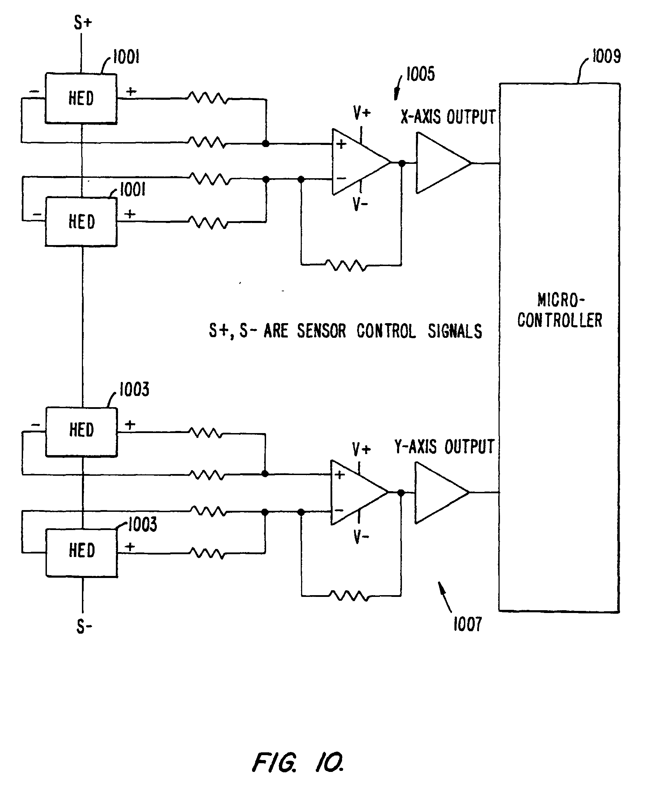

Fig. 10 is an illustration of an alternate power management sensor circuit according to the present invention. In this embodiment it is not possible to multiplex the output of HED sensors 1001 and 1003. Thus each axis requires a separate amplifier block 1005 and 1007, respectively. The required amplifier gain is higher than with the preferred embodiment, resulting in more amplifier output jitter. The benefit of this embodiment is that only two output ports from microcontroller 1009 are required in order to multiplex the supply signals, S+ and S-. Total power consumption for this embodiment is approximately 20 milliwatts.

Regardless of the embodiment of the present invention, the reduced current through the HEDs increases the gain required in the analog front-end amplifier. As a result of the increased gain, jitter is increased. The analog front-end amplifier operates in a noisy environment with low signal levels. The noise sources include digital noise, non-ideal power regulation, and hum from A/C power. All of these noise sources contribute to the jitter on controller 300.

In another aspect of the invention, an algorithm is used to qualify a change in the sensor array position, distinguishing between noise and sensor movement due to a human operator. During normal use, a game pad or mouse is typically used in one of two mariners. First, it may be moved quickly (*i.e*., at a high rate) in order to approach a desired region. Second, it may be moved slowly (*i.e*., at a low rate) when more precision is required, for example when the desired region or target is near.

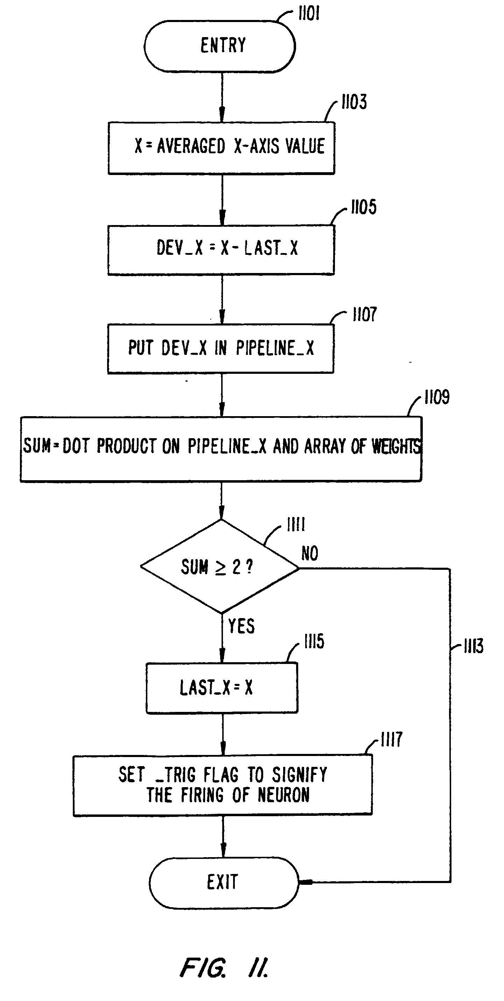

Fig. 11 is a flow chart illustrated the jitter reduction technique of the present invention utilizing a single neuron approach. As illustrated, the approach only accounts for positional changes in one axis. If a two-axis multivalue generator is used as in the preferred embodiment, the same approach is used for each axis.

The first step of the jitter reduction technique is the entry of a sample (step 1101). A typical operation cycle takes approximately 33 milliseconds. During each cycle the position of the sensor is determined by averaging over a predetermined number of samples, preferably 8 samples (step 1103). This step has the effect of reducing some high frequency jitter. Once an average is determined, the deviation of this sample from the previous sample is computed (step 1105) and the deviation is placed into a pipeline (step 1107). The length of the pipeline is a variable, preferably between four and eight samples deep.

The next step is to calculate a weighted sum of the data in the pipeline (step 1109). The weighted sum is then compared to a threshold value (step 1111). The threshold value is also variable. In at least one embodiment of the invention, each pipeline sample is independently weighted by a variable that allows the neural net to be tailored specifically to identify the noise sources causing the jitter.

If step 1111 determines that the weighted sum is less than the threshold value, the sample position is rejected as being jitter caused by noise (step 1113). If step 1111 determines that the weighted sum is greater than or equal to the threshold value, the neuron fires, the new position value is qualified, and the last position value is updated with the new position variable (steps 1115 and 1117).

The following example of the jitter reduction technique of the present invention is meant to be illustrative only as the variables can be set to other values as well. This example assumes the length of the pipeline is set to 4, all of the four weight variables are set to 0.25, and the threshold variable is set to 2. When the deviation is 8, only one cycle is required to qualify the new position since the weighted sum is at least equal to the value of the threshold variable (*i*.*e*., 8 * 0.25 = 2). When the deviation is 2, 4 cycles are required to qualify the new position. Thus as the deviation decreases, more cycles are required to reconfirm the new position. When there is a large positional deviation, the response is instantaneous.

As will be understood by those familiar with the art, the present invention may be embodied in other specific forms without departing from the spirit or essential characteristics thereof. Accordingly, the disclosures and descriptions herein are intended to be illustrative, but not limiting, of the scope of the invention which is set forth in the following claims.

## Claims

1. A controller for providing data to a computer system through a serial port of the computer system, comprising:
a multivalue generator comprised of a first axis pair of Hall effect devices corresponding to a first axis and a second axis pair of Hall effect devices corresponding to a second axis, wherein said first axis pair of Hall effect devices generates a first axis sample value from a first set of values that includes more than two analog values, wherein said second axis pair of Hall effect devices generates a second axis sample value from a second set of values that includes more than two analog values, and wherein said multivalue generator consumes less than 50 milliwatts; and
a processor coupled to said multivalue generator, said processor digitizing each of said sample values to produce a plurality of digitized values, said processor producing a digital data stream from said plurality of digitized values, and said processsor communicating said digital data stream to said computer system through said serial port.

2. The controller of claim 1, wherein said first axis pair of Hall effect devices are cascaded, and wherein said second axis pair of Hall effect devices are cascaded.

3. The controller of claim 2, further comprising a summing amplifier, wherein a first pair of outputs from said first axis pair of cascaded Hall effect devices and a second pair of outputs from said second axis pair of cascaded Hall effect devices are multiplexed and coupled to said summing amplifier.

4. The controller of claim 3, wherein a first and a second supply feed correspond to said first axis pair of cascaded Hall effect devices, wherein a third and a fourth supply feed correspond to said second axis pair of cascaded Hall effect devices, and wherein said first, second, third, and fourth supply feeds are multiplexed.

5. The controller of claim 4, wherein said first, second, third, and fourth supply feeds correspond to X+, X-, Y+, and Y-.

6. The controller of claim 4, wherein said processor controls said multiplexed supply feeds.

7. The controller of claim 6, wherein said processor drives each axis with a 1 percent duty cycle.

8. The controller of claim 2, further comprising a first summing amplifier coupled to said first axis pair of cascaded Hall effect devices, and a second summing amplifier coupled to said second axis pair of cascaded Hall effect devices.

9. The controller of claim 8, wherein said processor includes two output ports, wherein a first of said two output ports is coupled to a first supply signal coupled to said first axis pair of cascaded Hall effect devices, and wherein a second of said two output ports is coupled to a second supply signal coupled to said second axis pair of cascaded Hall effect devices.

10. The controller of claim 2, further comprising one or more digital controls, each generating a digital value in response to operation of said digital control, wherein said processor inserts said digital value in said digitized data stream.

11. A method of reducing jitter in a sensor of a multivalue generator coupled to a computer system, said method comprising the steps of:
defining an operation cycle time;
sampling the position of said sensor a predetermined number of times per cycle time;
determining an average sensor position;
determining a deviation between said average sensor position and a previous sensor position;
entering said determined deviation into a pipeline, wherein said pipeline accepts a predetermined number of samples;
determining a weighted sum of all samples within said pipeline;
comparing said weighted sum to a threshold value;
rejecting said average sensor position as jitter when said weighted sum is less than said threshold value; and
accepting said average sensor position as valid when said weighted sum is greater than or equal to said threshold value.

12. The method of claim 11, wherein said operation cycle time is approximately 33 milliseconds.

13. The method of claim 11, wherein said predetermined number of times per cycle time is 8.

14. The method of claim 11, wherein said predetermined number of samples in said pipeline is between 4 and 8 samples.
